# EUROPÄISCHE PATENTANMELDUNG

(11) **EP 2 993 767 A1**
(43) Veröffentlichungstag der Anmeldung: **09.03.2016**
(21) Anmeldenummer: 14183928.2
(22) Anmeldetag: 08.09.2014
(51) Int. Cl.: H02K 9/08

(54) **Generator für ein Kraftwerk**

(71) Anmelder: Siemens Aktiengesellschaft, 80333 München (DE)
(72) Erfinder: Braam, Jan-Henrik, 47546 Kalkar (DE); Evers, Christoph, 46236 Bottrop (DE); Gertz, Simon, 40229 Düsseldorf (DE); Grau Sorarrain, Esteban, 40215 Düsseldorf (DE); Haberer, Oliver, 44225 Dortmund (DE); Hagedorn, Markus, 44789 Bochum (DE); Jäkel, Christian, 47169 Duisburg (DE); Koebe, Mario, 45478 Mülheim an der Ruhr (DE); Kowalski, Matthias, 45478 Mülheim an der Ruhr (DE); Mrkulic, Omer, 46539 Dinslaken (DE); Mölders, Markus, 45472 Mülheim an der Ruhr (DE); Schild, Carolin, 45478 Mülheim an der Ruhr (DE)

(57) **Zusammenfassung**

Die Erfindung betrifft einen Generator (10) für ein Kraftwerk sowie ein Verfahren zur Kühlung des Generators. Der Generator weist einen Stator (20) und einen Rotor (30) auf, wobei der Stator (20) Stromleiter (22) führt. Die Stromleiter (22) bilden an zumindest einem Ende des Stators (20) einen Wickelkopf (24) aus und der Generator (10) hat ein Gebläse (40) zur Kühlung dieses Wickelkopfes (24). Das Gebläse (40) erzeugt eine auf den Wickelkopf (24) gerichtete Kühlluftströmung mit einer Axialkomponente und einer Radialkomponente.

## Beschreibung

Die vorliegende Erfindung betrifft einen Generator für ein Kraftwerk nach dem Oberbegriff des Anspruchs 1 sowie ein Verfahren zur Kühlung des Generators nach dem Oberbegriff des Anspruchs 11.

In Turbogeneratoren werden die Verbindungen zwischen einzelnen Stäben des Stators mittels eines sogenannten Wickelkopfes vorgenommen. Im Wickelkopf werden die Stäbe in tangentialer sowie radialer Richtung derart geführt, dass am Ende des Wickelkopfes die zu verbindenden Stäbe beieinander liegen. Diese Stäbe müssen elektrisch miteinander verbunden werden, wobei die Verbindung auf verschiedene Arten durchgeführt werden kann. Zum einen besteht die Möglichkeit, die einzelnen Teilleiter eines Stabes mit den Teilleitern eines zweiten Stabes zu verbinden, was als Teilleiterdurchschaltung bezeichnet wird. Zum anderen besteht die Möglichkeit, die Teilleiter eines Stabes zu Bündel zusammenzufassen und diese Bündel jeweils mit den Bündeln des Gegenstabes zu verbinden, was als Bündelverschaltung bezeichnet wird. Eine dritte Variante besteht darin, die Teilleiter eines Stabes vollständig miteinander zu verlöten und die Verbindung zum Gegenstab massiv mit einer Lasche auszuführen. Allen Verbindungsarten ist gemeinsam, dass die Verbindungen manuell hergestellt werden und nachträglich eine Isolation aufgebracht werden muss. Im Falle der Verwendung von Laschen entstehen zusätzliche Widerstandsverluste, welche zu einer Erwärmung des Wickelkopfes führen. Durch die erhöhten Temperaturen kommt es zu einem weiteren Anstieg des elektrischen Widerstands und somit zu einer weiteren Reduzierung des Wirkungsgrades des Generators.

Bei vielen Turbogeneratoren stellt die Laschenverbindung am Wickelkopf das leistungsbegrenzende Bauteil dar. Diese Begrenzung ist durch die Erwärmung der Laschen durch den elektrischen Widerstand bedingt.

Bislang wurde die Laschenverbindung mit einer möglichst dünnen Isolation ausgeführt, um eine gute indirekte Kühlung von außen zu gewährleisten. Eine dünne Isolation ist allerdings nur bei benachbarten Laschen mit geringer Spannungsdifferenz möglich. An Phasenübergängen wird eine dicke Isolation aufgetragen.

Zusätzlich erfolgt eine Kühlung u. a. des Stator-Wickelkopfes durch einen Lüfter auf dem Rotor. Dabei sind die Lüfterschaufeln radial zu einer Mittelachse des Rotors angeordnet und erzeugen einen axialen Luftstrom, welcher u. a. den Stator-Wickelkopf kühlt.

Aufgabe der Erfindung ist es, einen Generator mit einer verbesserten Kühlung und einem damit verbundenen höheren Wirkungsgrad bereitzustellen.

Der erfindungsgemäße Generator mit den Merkmalen des Anspruchs 1 bietet gegenüber den aus dem Stand der Technik bekannten Generatoren den Vorteil, dass durch das Gebläse ein Kühlluftstrom erzeugt wird, welcher die thermische Belastung an den Laschenverbindungen bzw. am Stator-Wickelkopf reduziert, indem die Wärme durch einen Kühlluftstrom mit radialer und axialer Komponente effizienter abgeleitet wird. Durch die verbesserte Kühlung des Wickelkopfes sind bei gleicher Baugröße Generatoren mit höherem Wirkungsgrad bzw. größere Leistung möglich.

Durch die in den abhängigen Ansprüchen angeführten Maßnahmen sind vorteilhafte Weiterbildungen und Verbesserungen des im unabhängigen Anspruch angegebenen Generators möglich.

Eine vorteilhafte Weiterbildung besteht darin, dass das Gebläse einen ersten Bereich aufweist, welcher einen axial zu einer Mittelachse des Rotors ausgerichteten Kühlluftstrom erzeugt, und einen zweiten Bereich aufweist, welcher einen radial oder diagonal zu der Mittelachse des Rotors ausgerichteten Kühlluftstrom erzeugt. Durch diese Lösung bleibt der Kühlluftstrom in axialer Richtung erhalten und wird durch einen zusätzlichen Kühlluftstrom in radialer bzw. diagonaler Richtung ergänzt, so dass eine optimierte Anströmung des Wickelkopfes und eine damit verbundene verbesserte Wärmeabfuhr erreicht werden kann.

Besonders vorteilhaft ist dabei, wenn der erste Bereich konzentrisch um die Mittelachse des Rotors ausgebildet ist, und der zweite Bereich den ersten Bereich zumindest abschnittsweise, bevorzugt konzentrisch, umschließt. Durch diese Lösung kann eine breitere Auffächerung des Kühlluftstromes ohne zusätzliche Leitschaufeln erreicht werden, wodurch eine konstruktiv einfache und kostengünstige Ausführung des Generators möglich ist.

Eine bevorzugte Ausführungsvariante weist ein Gebläse mit mindestens einer Gebläseschaufel auf, wobei diese Gebläseschaufel einen ersten Abschnitt aufweist, welcher radial zu einer Mittelachse des Rotors verläuft, und einen zweiten Abschnitt aufweist, welcher unter einem Winkel von 10° bis 90° zur Mittelachse des Rotors verläuft. Eine solche Gebläseschaufel erzeugt in ihrem ersten Abschnitt einen axialen Kühlluftstrom und in ihrem zweiten Abschnitt einen Kühlluftstrom, der radial oder diagonal zum axialen Kühlluftstrom ausgebildet ist. Besonders günstig ist es, wenn der zweite Abschnitt in einem Winkel von 30° bis 75° zur Mittelachse des Rotors ausgebildet ist, denn so wird durch den zweiten Bereich ein günstiger, diagonal zur Mittelachse verlaufender Kühlluftstrom erzeugt.

Besonders bevorzugt ist dabei, wenn der zweite Abschnitt sich in radialer Richtung von der Mittelachse des Rotors außen an den ersten Abschnitt der Gebläseschaufel anschließt. Dadurch wird innen durch den ersten Bereich ein weitestgehend axialer Kühlluftstrom erzeugt, während der zweite Bereich einen diagonalen Kühlluftstrom erzeugt. Auf diese Weise kann mit einem Gebläse bzw. mit einer Gebläseschaufel ein Kühlluftstrom mit radialer bzw. diagonaler und axialer Komponente erzeugt werden.

Eine vorteilhafte Weiterbildung besteht darin, dass die Gebläseschaufel L-förmig ausgebildet ist. Dadurch entsteht an dem von der Mittelachse entfernten Ende der Gebläseschaufel eine radial orientierte Kühlluftströmung, während an dem zur Mittelachse orientierten Ende der Kühlluftschaufel eine axiale Strömung ausgebildet wird.

Eine vorteilhafte Weiterbildung besteht darin, dass sich die Gebläseschaufel in Richtung von der Mittelachse des Rotors zu ihrem dem Rotor abgewandten Endbereich verjüngt. Dadurch können die bewegten Massen gering gehalten werden und Material an der Gebläseschaufel eingespart werden.

Alternativ ist eine Ausführungsform vorgesehen, bei der das Gebläse ein erstes Lüfterrad zur Erzeugung eines Luftstroms axial zu einer Mittelachse des Rotors und ein zweites Lüfterrad zur Erzeugung eines Luftstroms radial oder diagonal zur Mittelachse des Rotors aufweist. Durch ein Gebläse mit einem Axiallüfter und einem Radiallüfter kann ebenfalls auf einfache und kostengünstige Weise ein Kühlluftstrom erzeugt werden, welcher neben einer axialen Komponente auch eine radiale bzw. diagonale Komponente aufweist.

Besonders vorteilhaft ist dabei, wenn das zweite Lüfterrad ringförmig ausgebildet ist, wobei das erste Lüfterrad und das zweite Lüfterrad konzentrisch zueinander angeordnet sind. Dadurch lässt sich eine einfache Positionierung und Fixierung der Lüfterräder zueinander erreichen, wobei das erste Lüfterrad im Innern des ringförmigen zweiten Lüfterrads angeordnet ist.

Besonders vorteilhaft ist dabei, wenn an dem Gebläse ein Ring ausgebildet ist, welcher eine äußere Begrenzung des ersten, inneren Lüfterrads, sowie eine innere Begrenzung des zweiten Lüfterrades darstellt. So können das erste Lüfterrad und das zweite Lüfterrad einfach in einem gemeinsamen Gehäuse montiert bzw. als Baugruppe vorgefertigt werden, was den Montageaufwand reduziert.

Unter den Begriffen radial bzw. diagonal sind in dieser Anmeldung nicht nur Winkel von 90° bzw. 45° zur Mittelachse des Rotors zu verstehen, sondern ein Winkelbereich von 5° bis ca. 100° und dienen zur Abgrenzung von einer Strömung axial zur Mittelachse des Rotors welche weitestgehend in einem Winkel von ca. 0°, d.h. parallel zur Mittelachse, ausgebildet ist.

Im Folgenden wird ein Ausführungsbeispiel des erfindungsgemäßen Generators anhand der beigefügten Zeichnungen erläutert. Gleiche Bauteile oder Bauteile mit gleicher Funktion sind dabei mit gleichen Bezugszeichen gekennzeichnet.
- Fig. 1: zeigt einen Schnitt durch einen erfindungsgemäßen Generator.
- Fig. 2: zeigt einen Ausschnitt aus dem Generator, wobei ein Rotor mit einer Gebläseschaufel sowie ein Luftleitblech dargestellt sind.
- Fig. 3: zeigt eine Gebläseschaufel eines erfindungsgemäßen Generators.
- Fig. 4: zeigt die Antriebswelle des Rotors mit erfindungsgemäßen Gebläseschaufeln in 3D-Ansicht.
- Fig. 5: zeigt einen kombinierten Radial-/Axial-Lüfter eines erfindungsgemäßen Generators in der Frontansicht.
- Fig. 6: zeigt den kombinierten Radial-/Axial-Lüfter in der Seitenansicht.

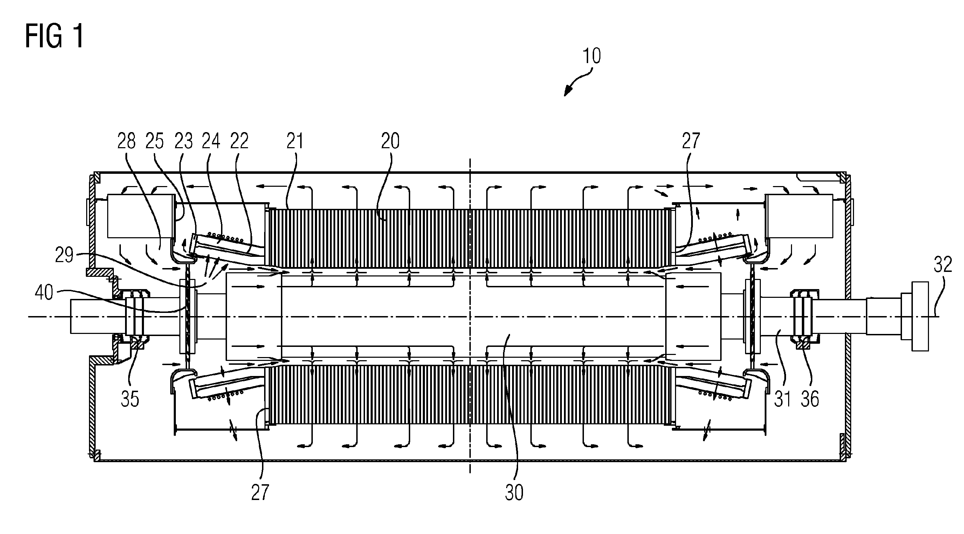

In Fig. 1 ist ein Generator 10 für ein Kraftwerk dargestellt. Der Generator weist einen Stator 20 auf, in dem ein Rotor 30 angeordnet ist. Der Rotor 30 weist eine Antriebswelle 31 auf, welche an zwei Lagern 35,36 rotierbar gelagert ist. Durch die Antriebswelle 31 des Rotors 30 verläuft eine Mittelachse 32. Der Stator 20 wird an beiden Seiten durch Trennbleche 25 abgeschirmt. Der Stator 20 weist einen Statorkörper 21 auf, aus dem an den Stirnseiten 27 Stromleiter 22 austreten und einen Wickelkopf 24 ausbilden. Zur Verbindung der Stromleiter 22 sind an den Enden Laschen 23 vorgesehen, über die zwei benachbarte Stromleiter 22 im Wickelkopf 24 miteinander verbunden sind.

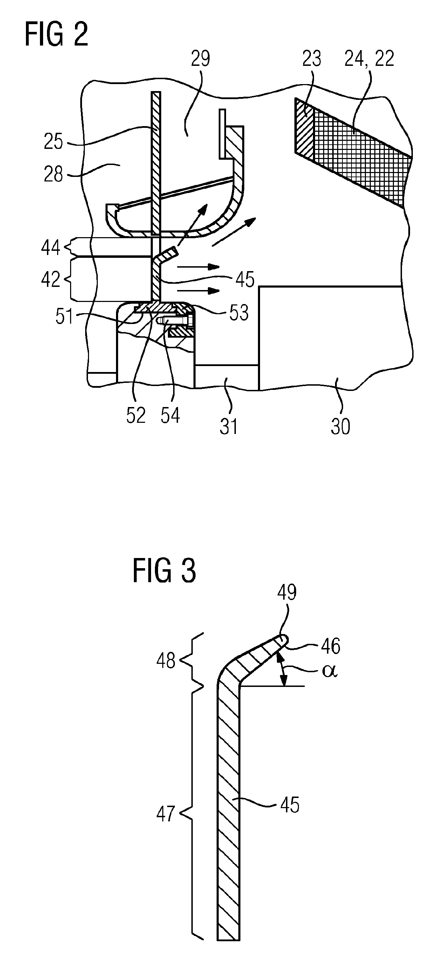

An dem Rotor 30 ist ein Gebläse 40 fixiert, was in der gezeigten, einfachen Ausführungsform Gebläseschaufeln 45 aufweist, welche wie in Fig. 2 dargestellt an der Antriebswelle 31 des Rotors befestigt sind. Die Gebläseschaufeln 45 sind gleichmäßig über den Umfang der Antriebswelle 31 verteilt und verlaufen in einer Ebene mit dem Trennblech 25, welches den Stator 20 seitlich begrenzt und eine Saugseite 28 des Gebläses 40 von einer Druckseite 29 des Gebläses 40 trennt. Die Gebläseschaufel 45 weist einen Schaufelfuß 52 auf, welcher in einer Nut 51 der Antriebswelle 31 fixierbar ist. Dazu ist an der Antriebswelle 31 ein Verspannungselement 53 vorgesehen, welches mittels einer Schraube 54 an der Antriebswelle 31 fixierbar ist und so den Schaufelfuß 52 der Gebläseschaufel 45 sicher fixiert. Die Gebläseschaufel 45 weist einen ersten Bereich 42 auf, welcher radial bzw. senkrecht zur Mittelachse 32 des Rotors 30 bzw. der Antriebswelle 31 verläuft. Der erste Bereich 42 ist dazu ausgebildet, eine Kühlluftströmung zu erzeugen, welche axial zur Mittelachse 32 des Rotors 30 verläuft. Radial nach außen schließt sich ein zweiter Bereich 44 an, welcher den ersten Bereich 42 konzentrisch umschließt. Der zweite Bereich 44 ist dazu ausgebildet, eine Kühlluftströmung in einem Winkel von 5° bis ca. 100° zur Mittelachse des Rotors auszubilden, welche im Folgenden als radiale bzw. diagonale Kühlluftströmung bezeichnet wird.

In Fig. 3 ist die Gebläseschaufel 45 dargestellt. Die Gebläseschaufel 45 weist einen ersten Abschnitt 47 auf, welcher radial zur Mittelachse 32 des Rotors 30 verläuft, wobei sich in radialer Richtung nach außen ein zweiter Abschnitt 48 anschließt, welcher unter einen Winkel α von ca. 30° zur Mittelachse 32 des Rotors 30 verläuft. Alternativ sind auch andere Winkel α zwischen ca. 5° und ca. 85°, bevorzugt zwischen 30° und 60° denkbar. Dabei erzeugt der erste Abschnitt 47 bei einer Rotation der Antriebswelle 31 des Rotors 30 den ersten, axial ausgerichteten Bereich 42 der Kühlluftströmung, während der zweite Abschnitt 48 der Gebläseschaufel 45 den zweiten diagonalen bzw. radialen Bereich 44 der Kühlluftströmung erzeugt.

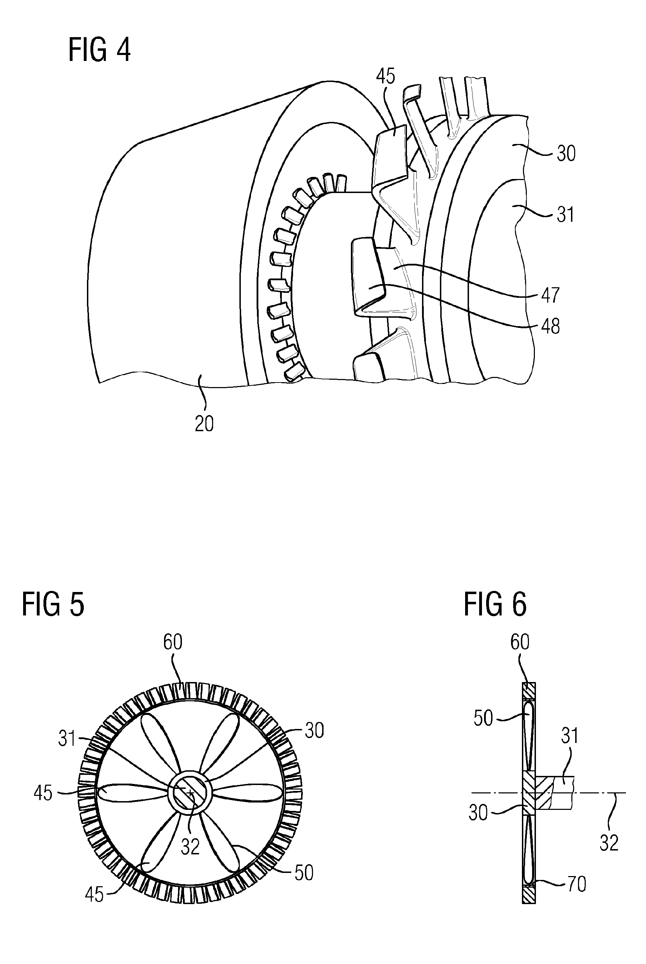

Die Gebläseschaufel 45 weist an einem der Antriebsachse 31 abgewandten Ende 49 eine Verjüngung 46 auf, um Druckschwingungen am Ende 49 der Gebläseschaufel 45 zu reduzieren und die bewegten Massen möglichst dicht am Rotor 31 zu konzentrieren. In Fig. 4 ist die Kombination von Antriebswelle und Gebläse nochmals in einer perspektivischen Darstellung gezeigt.

Fig. 5 zeigt eine alternative Ausführungsform des Gebläses 40. Auf der Antriebswelle 31 des Rotors 30 ist ein erstes Lüfterrad 50 zur Erzeugung eines Kühlluftstroms in axialer Richtung, parallel zur Mittelachse 32 des Rotors 30 angeordnet. Das erste Lüfterrad 50 wird nach außen hin durch einen Ring 70 begrenzt, wobei der Ring 70 gleichzeitig einen Außendurchmesser des ersten Lüfterrades 50 sowie einen Innendurchmesser eines zweiten Lüfterrades 60 bildet, welches ringförmig um das erste Lüfterrad 50 ausgebildet ist und einen Kühlluftstrom radial bzw. diagonal zur Mittelachse 32 des Rotors 30 ausbildet. Dabei trennt der Ring 70 den axialen Kühlluftstrom des ersten Lüfterrades 50, welches als Axiallüfter ausgebildet ist, vom Kühlluftstrom des zweiten Lüfterrades 60, welches als Radiallüfter ausgebildet ist. Fig. 6 zeigt den Lüfter aus Fig. 5 zusätzlich in einer Seitenansicht.

Im Betrieb des Generators 10 rotiert die Antriebswelle 31 des Rotors 30. Dabei wird durch das Gebläse 40 Luft auf der Saugseite 28 des Trennblechs 25 angesaugt und auf die Druckseite 29 gefördert. Die Strömung der Luft ist dabei durch die kleinen Pfeile in Fig. 1 gekennzeichnet. Die Luft strömt in axialer Richtung durch Öffnungen in der Stirnseite 27 des Stators 20 in den Generator 10 bzw. zwischen der Antriebswelle 31 des Rotors 30 und dem Statorkörper 21 ein und strömt auf der Außenseite des Stators 20 wieder zurück. Durch die erfindungsgemäße Lösung wird eine deutlich bessere, direkte Anströmung der Wickelköpfe 24 mit Kühlluft erreicht und somit eine bessere Kühlung des Wickelkopfes 24 realisiert.

Bei einem geschlossenen Kühlsystem kann anstelle von Luft auch ein anderes Kühlmedium genutzt werden.

Obwohl die Erfindung im Detail durch die bevorzugten Ausführungsbeispiele näher beschrieben wurde, so ist die Erfindung nicht auf die offenbarten Ausführungsbeispiele beschränkt und andere Variationen können vom Fachmann hieraus abgeleitet werden, ohne den Schutzumfang der Erfindung zu verlassen.

## Patentansprüche

1. Generator (10) für ein Kraftwerk, mit einem Stator (20) und einem Rotor (30),
wobei der Stator (20) Stromleiter (22) führt,
wobei die Stromleiter (22) an zumindest einem Ende des Stators (20) einen Wickelkopf (24) ausbilden, und wobei der Generator (10) ein Gebläse (40) zur Kühlung des Wickelkopfes (24) aufweist,
**dadurch gekennzeichnet, dass**
das Gebläse (40) einen auf den Wickelkopf (24) gerichtete Kühlluftströmung mit einer Axialkomponente und einer Radialkomponente erzeugt.

2. Generator (10) nach Anspruch 1,
**dadurch gekennzeichnet, dass**
das Gebläse (40) einen ersten Bereich (42) aufweist, welcher einen axial zu einer Mittelachse (32) des Rotors (30) ausgerichteten Kühlluftstrom erzeugt,
und einen zweiten Bereich (44) aufweist, welcher einen radial oder diagonal zu der Mittelachse (32) des Rotors (30) ausgerichteten Kühlluftstrom erzeugt.

3. Generator (10) nach Anspruch 2,
**dadurch gekennzeichnet, dass**
der erste Bereich (42) konzentrisch um die Mittelachse (32) des Rotors (30) ausgebildet ist, und dass der zweite Bereich (44) den ersten Bereich (42), bevorzugt konzentrisch, umschließt.

4. Generator (10) nach einem der Ansprüche 1 bis 3,
**dadurch gekennzeichnet, dass**
das Gebläse (40) mindestens eine Gebläseschaufel (45) aufweist,
wobei die mindestens eine Gebläseschaufel (45) einen ersten Abschnitt (47) aufweist, welcher radial zu einer Mittelachse (32) des Rotors (30) verläuft,
und einen zweiten Abschnitt (48) aufweist, welcher unter einem Winkel von 5° bis 85°, bevorzugt zwischen 30° und 60° zur Mittelachse (32) des Rotors (30) verläuft.

5. Generator (10) nach Anspruch 4,
**dadurch gekennzeichnet, dass**
sich der zweite Abschnitt (48) radial in Bezug auf die Mittelachse (32) des Rotors (30) außen an den ersten Abschnitt (47) der Gebläseschaufel (45) anschließt.

6. Generator (10) nach einem der Ansprüche 4 oder 5,
**dadurch gekennzeichnet, dass**
die mindestens eine Gebläseschaufel (45) L-förmig ausgebildet ist.

7. Generator (10) nach einem der Ansprüche 4 bis 6,
**dadurch gekennzeichnet, dass**
sich die mindestens eine Gebläseschaufel (45) in Richtung von der Mittelachse (32) des Rotors (30) zu ihrem dem Rotor (30) abgewandten Endbereich (49) verjüngt.

8. Generator (10) nach einem der Ansprüche 1 bis 3,
**dadurch gekennzeichnet, dass**
das Gebläse (40) ein erstes Lüfterrad (50) zur Erzeugung eines Luftstroms axial zu einer Mittelachse (32) des Rotors (30) und ein zweites Lüfterrad (60) zur Erzeugung eines Luftstroms radial oder diagonal zur Mittelachse (32) des Rotors (30) aufweist.

9. Generator (10) nach Anspruch 8,
**dadurch gekennzeichnet, dass**
das zweite Lüfterrad (60) ringförmig ausgebildet ist, wobei das erste Lüfterrad (50) und das zweite Lüfterrad (60) konzentrisch zueinander angeordnet sind, und wobei das erste Lüfterrad (50) den Luftstrom axial zur Mittelachse (32) erzeugt und das zweite Lüfterrad (60) den Luftstrom radial oder diagonal zur Mittelachse (32) erzeugt.

10. Generator (10) nach Anspruch 9,
**dadurch gekennzeichnet, dass**
an dem Gebläse einen Ring (70) zur Begrenzung des ersten Lüfterrades (50) ausgebildet ist,
wobei der Ring (70) zur Begrenzung des ersten Lüfterrades (50) an einem Außendurchmesser des ersten Lüfterrades (50) angeordnet ist, einen Innendurchmesser des zweiten Lüfterrades (60) bildet und dabei den axialen Luftstrom vom radialen oder diagonalen Luftstrom trennt.

11. herfahren zur Kühlung eines Generators (10) mit einem Stator (20) und einem Rotor (30),
wobei im Stator (20) Stromleiter (22) geführt werden, wobei die Stromleiter (22) an zumindest einem Ende des Stators (20) einen Wickelkopf (24) ausbilden, und wobei der Generator (10) ein Gebläse (40) zur Kühlung des Wickelkopfes (24) aufweist,
**dadurch gekennzeichnet, dass**
durch das Gebläse (40) ein Kühlluftstrom erzeugt wird, wobei der Wickelkopf (24) durch eine auf ihn gerichtete Kühlluftströmung mit einer Axialkomponente und einer Radialkomponente gekühlt wird.
